# EUROPEAN PATENT SPECIFICATION

(11) **EP 4 213 134 B1**
(45) Date of publication and mention of the grant of the patent: **10.12.2025**
(21) Application number: 20957721.2
(22) Date of filing: 16.10.2020
(51) Int. Cl.: G06F 7/72, H04L 9/08, G09C 1/00

(54) **CONCEALED MODULUS CONVERSION SYSTEM, DISTRIBUTED PROCESSING DEVICE, CONCEALED MODULUS CONVERSION METHOD, AND PROGRAM**
SYSTEM ZUR UMWANDLUNG VERBORGENER MODULE, VERTEILTE VERARBEITUNGSVORRICHTUNG, VERFAHREN ZUR UMWANDLUNG VERBORGENER MODULE UND PROGRAMM DAFÜR
SYSTÈME DE CONVERSION DE MODULE CACHÉ, DISPOSITIF DE TRAITEMENT RÉPARTI, PROCÉDÉ DE CONVERSION DE MODULE CACHÉ ET PROGRAMME

(43) Date of publication of application: 19.07.2023
(73) Proprietor: NTT, Inc., Tokyo 100-8116 (JP)
(72) Inventor: IKARASHI, Dai, Musashino-shi, Tokyo 180-8585 (JP)
(74) Representative: MERH-IP Matias Erny Reichl Hoffmann Patentanwälte PartG mbB
(86) International application number: PCT/JP2020/039079
(87) International publication number: WO 2022/079892

(56) References cited:
- WO-A1-2015/053185
- WO-A1-2019/087317
- US-A1- 2016 218 862
- KIKUCHI RYO ET AL: "Efficient Bit-Decomposition and Modulus-Conversion Protocols with an Honest Majority : 23rd Australasian Conference, ACISP 2018, Wollongong, NSW, Australia, July 11-13, 2018, Proceedings", vol. 10946, 1 January 2018 (2018-01-01), pages 64 - 82, XP055932868, Retrieved from the Internet <URL:https://eprint.iacr.org/archive/2018/387/1525139588.pdf> DOI: 10.1007/978-3-319-93638-3_5
- CHING-HUA YU ET AL: "Probabilistically Correct Secure Arithmetic Computation for Modular Conversion, Zero Test, Comparison, MOD and Exponentiation", 5 September 2012, SECURITY AND CRYPTOGRAPHY FOR NETWORKS, SPRINGER BERLIN HEIDELBERG, BERLIN, HEIDELBERG, PAGE(S) 426 - 444, ISBN: 978-3-642-32927-2, XP047016113
- "Pattern Recognition : 5th Asian Conference, ACPR 2019, Auckland, New Zealand, November 26–29, 2019, Revised Selected Papers, Part II", vol. 10946, 1 January 2018, SPRINGER INTERNATIONAL PUBLISHING, Cham, ISBN: 978-3-030-41298-2, ISSN: 0302-9743, article KIKUCHI RYO, IKARASHI DAI, MATSUDA TAKAHIRO, HAMADA KOKI, CHIDA KOJI: "Efficient Bit-Decomposition and Modulus-Conversion Protocols with an Honest Majority : 23rd Australasian Conference, ACISP 2018, Wollongong, NSW, Australia, July 11-13, 2018, Proceedings", pages: 64 - 82, XP055932868, DOI: 10.1007/978-3-319-93638-3_5

## Description

### [Technical Field]

The present invention relates to a technique for performing modulus transformation in secure computation.

### [Background Art]

Modulus transformation for transforming the modulus of secret sharing value is a basic process frequently used in performing secure computation. Therefore, the efficiency of the modulus conversion greatly affects the speed up of the entire secure computation.

As a prior art of an efficient modulus conversion method in the case of satisfying the condition of quotient transfer, NPL 1 is known.

### [Citation List]

### [Non Patent Literature]

[NPL 1] Kikuchi, R., Ikarashi, D., Matsuda, T., Hamada, K. and Chida, K., "Efficient Bit-Decomposition and Modulus Conversion Protocols with an Honest Majority", Information Security and Privacy - 23rd Australasian Conference, ACISP 2018, Wollongong, NSW, Australia, July 11-13, 2018, Proceedings (Susilo, W. and Yang, G., eds.), Lecture Notes in Computer Science, Vol. 10946, Springer, pp. 64-82 (online).

### [Summary of Invention]

### [Technical Problem]

However, the prior art has a problem that it cannot be used when the condition of the quotient transfer is not satisfied.

An object of the present invention is to provide a secure modulus conversion system, a distributed processing apparatus, a secure modulus conversion method, and a program that can efficiently perform modulus conversion even when a condition of quotient transfer is not satisfied.

### [Solution to Problem]

In order to solve the above problem, the present invention provides a secure modulus conversion system, a distributed processing apparatus, a secure modulus conversion method, and a program, having the features of respective independent claims.

According to one embodiment of the present invention, the secure modulus conversion system includes n distributed processing apparatuses. Each of the n distributed processing apparatuses includes a first secret sharing conversion unit, a bit decomposition unit, an addition unit, a first modulus conversion unit, a second modulus conversion unit, a second secret sharing conversion unit, and a sure computation unit. Two distributed processing apparatuses p₀, p₁ of the n distributed processing apparatuses each include the second modulus conversion unit. Let a plain text a be a (k,n)-secret-sharing share [[a]]^{p} by modulo p, where n in (k,n)-secret-sharing share is any one of an integer of 3 or more, k is any one of an integer of 2 or more and less than n, and let a plain text a be a (k,k)-additive secret-sharing share <a>^{p}, the n pieces of first secret sharing conversion units converts (k,n)-secret-sharing share [[a]]^{p} into (k,k)-additive-secret-sharing share <a>^{p} of shares which distributed processing apparatuses p₀ and p₁ have; the bit decomposition unit of the distributed processing apparatus p₀ calculates a'₀:=<a>^{p}₀+(2^{|p|}-p) by using share <a>^{p}₀; n pieces of bit decomposition units execute (k,n)-secret-sharing for each bit of a'₀ to obtain a bit representation share [[a'₀]]^{2^|p|}, and execute (k,n)-secret-sharing for each bit of the share <a>^{P}₁ to obtain a bit representation share [[a₁]]^{2^|p|}; the n pieces of addition units obtain a bit representation share [[a'₀+a₁]]^{2^(|p|+1)} of a'₀+a₁ from the share [[a'₀]]^{2^|p|} and the share [[a₁]]^{2^|p|} by by an addition circuit, and let the most significant bit of the share [[a'₀+a₁]]^{2^(|p|+1)} be the share [[q]]²; the n pieces of first modulus conversion units obtains a share [[q]]^{Q} from the share [[q]]² by mod 2 → mod Q conversion; the two second modulus conversion units obtain <a>^{p}₀ mod Q and <a>^{p}₁ mod Q from <a>^{p}₀ and <a>^{p}₁, respectively, and set a share <a'>^{Q}; the n pieces of second secret sharing conversion units convert the share <a'>^{Q} into (k,n)-secret-sharing to obtain a (k,n)-secret-sharing share [[a']]^{Q}; the n pieces of sure computation units calculate [[a]]^{Q}=[[a']]^{Q}-p[[q]]^{Q} from the share [[a']]^{Q} and the share [[q]]^{Q}.

In order to solve the above problem, according to another embodiment of the present invention, the distributed processing apparatus is included in a secure modulus conversion system. The distributed processing apparatus includes: the first secret sharing conversion unit which, let a plain text a be a (k,n)-secret-sharing share [[a]]^{p} by modulo p, where n in (k,n)-secret-sharing share is any one of an integer of 3 or more, k is any one of an integer of 2 or more and less than n, and let a plain text a be a (k,k)-additive-secret-sharing share <a>^{p}, together with (n-1) distributed processing apparatuses, converts (k,n)-secret-sharing share [[a]]^{p} into (k,k)-additive secret-sharing share <a>^{p} of shares which distributed processing apparatuses p₀ and p₁ have; the bit decomposition unit which, a'₀:=<a>^{p}₀+(2^{|p|}-p) and together with (n-1) pieces of distributed processing apparatuses, executes (k,n)-secret-sharing for each bit of to obtain a bit representation share [[a'₀]]^{2^|p|}, and executes (k,n)-secret-sharing for each bit of the share <a>^{P}₁ to obtain a bit representation share [[a₁]]^{2^|p|}; the addition unit which together with (n-1) pieces of distributed processing apparatuses, obtains a bit representation share [[a'₀+a₁]]^{2^(|p|+1)} of a'₀+a₁ from the share [[a'₀]]^{2^|p|} and the share [[a₁]]^{2^|p|} by by an addition circuit; let the most significant bit of the share [[a'₀+a₁]]^{2^(|p|+1)} be the share [[q]]², the first modulus conversion unit which together with (n-1) pieces of distributed processing apparatuses, obtains a share [[q]]^{Q} from the share [[q]]² by mod 2 → mod Q conversion; the second modulus conversion unit which sets <a>^{p}₀ mod Q and <a>^{p}₁ mod Q to a share <a'>^{Q}, and together with (n-1) pieces of distributed processing apparatuses, converts the share <a'>^{Q} into (k,n)-secret-sharing to obtain a (k,n)-secret-sharing share [[a']]^{Q}; and the sure computation unit which together with (n-1) pieces of distributed processing apparatuses, calculates [[a]]^{Q}=[[a']]^{Q}-p[[q]]² from the share [[a']]^{Q} and the share [[q]]^{Q}.

### [Advantageous Effects of Invention]

According to the present invention, the modulus conversion can be efficiently performed even when the condition of the quotient transfer is not satisfied.

### [Brief Description of Drawings]

[Fig.1]

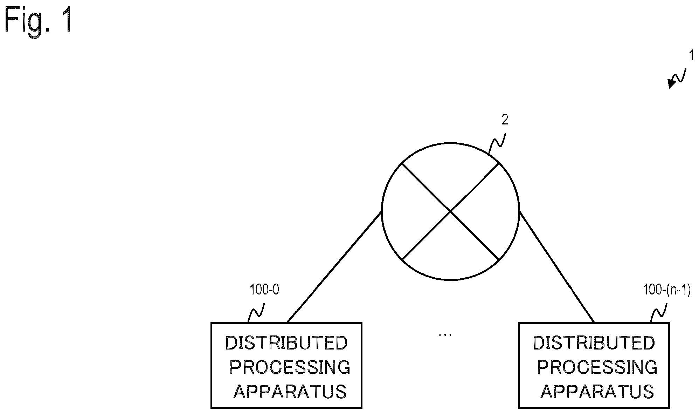

   Fig.1 is a drawing illustrating an example of a configuration of a secure modulus conversion system according to a first embodiment.
[Fig. 2]

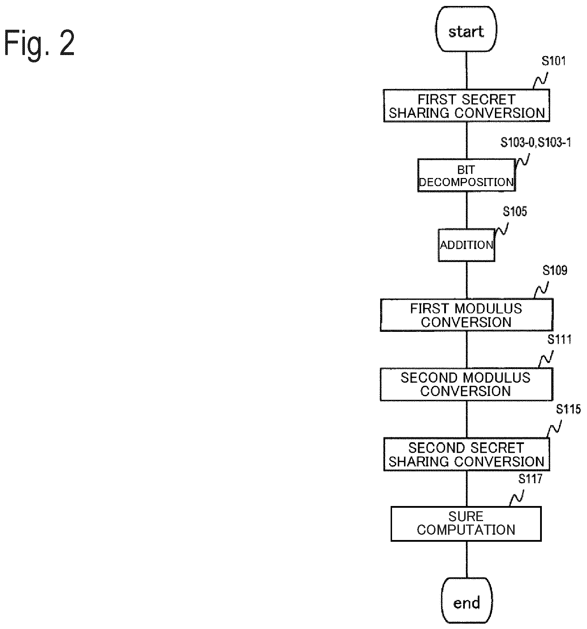

   Fig. 2 is a diagram illustrating an example of a processing flow of the secure modulus conversion system according to the first embodiment.
[Fig. 3]

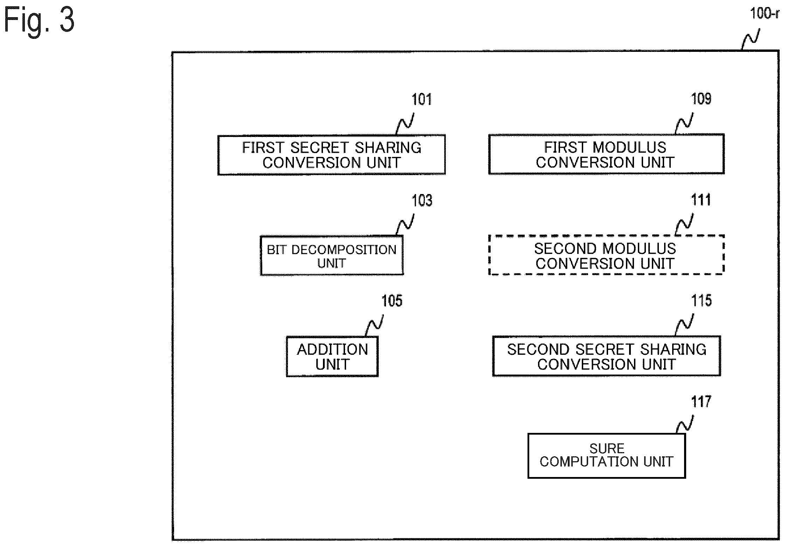

   Fig. 3 is a functional block diagram of a distributed processing apparatus according to the first embodiment.
[Fig. 4]

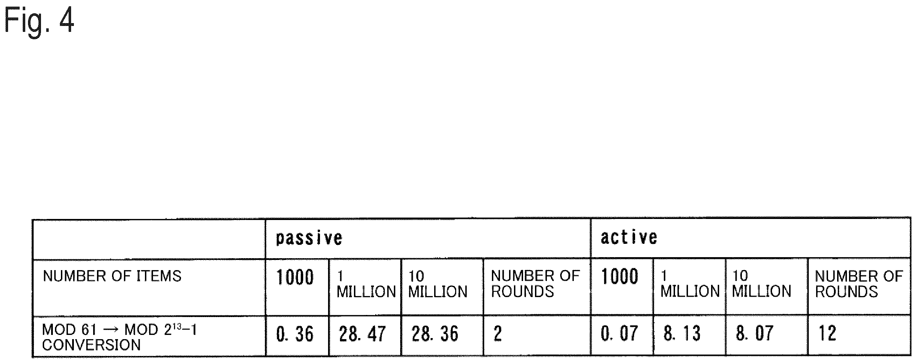

   Fig. 4 is a drawing showing results of actual machine experiment.
[Fig. 5]

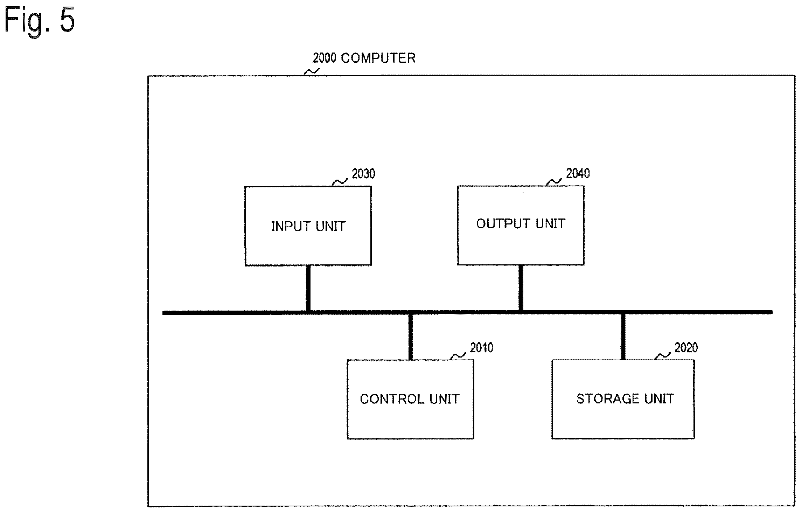

   Fig. 5 is a drawing illustrating an example of configuration of a computer to which the method of the present invention is applied.

### [Description of Embodiments]

Hereinafter, embodiments of the present invention will be described. In the drawings used for the following description, the same reference numerals are given to components having the same functions or steps of performing the same processing, and repeated description thereof will be omitted. In the following descriptions, symbols "→" or the like that will be used in the text should be originally placed directly above the character immediately following them, but are instead placed immediately before the character due to the limitation of the text notation. In formulas, these symbols are written at the original positions. Further, processing performed in units of respective elements such as vectors and matrices will be applied to all the elements of the vector or the matrices unless otherwise specifically noted.

### <First Embodiment>

First, the notation in the present embodiment will be described.

### <Notation>

- k: a threshold value of secret sharing. For example, 2 is used.
- n: a number of sharing of secret sharing, in other words, a number of parties of secure computation. For example, 3 is used.
- P: prime number. For example, a Mersenne prime number 2⁶¹-1 is used.
- p: the number of bits of P. When P is the Mersenne prime number, p is also a prime number. For example, 61 is used.
- [[x]]^{y}: a (k,n)-secret-sharing share for a mod y element x.
- <x>^{y}: a (k,k)-additive-secret-sharing share for mod y element x.
- [[x]]^{2^m}: a share with m units arranged shares of the form of [[x]]². It may be regarded as a bit representation of a numerical value. Note that, in the subscript, A^B means A^{B}, and A_B means A_{B}.

Next, two secret sharings, i.e., (k,n)-secret-sharing and (k,k)-additive-secret-sharing used in this embodiment, will be described.

### <(k,n)-secret-sharing>

(k,n)-secret-sharing is a security technique in which an input plain text is divided into n pieces of fragments (called shares), and each of the fragments is shared to n different subjects (called parties) P= (p₀,..., pₙ₋₁), and any k pieces of shares can restore the plain text, and no information about the plain text can be obtained when less than k-1 pieces of shares. For example, there are the Shamir secret sharing, the duplicate secret sharing or the like. In the present embodiment, a set obtained by collecting all shares shared by (k,n)-secret sharing under modulo y and having a certain value x in a plain text is expressed as [[x]]^{y}. For each share, the share of the party pᵣ is expressed as [[x]]^{y}ᵣ. It is assumed herein that r = 0, ..., n-1.

### <(k,k)-additive-secret-sharing>

(k,k)-secret-sharing is the case where n= k, in (k,n)-secret-sharing. The plain text cannot be restored unless shares of all parties are collected. (k,k)-secret-sharing by duplicated secret sharing is particularly called additive secret sharing, which is the simplest method for restoring a plain text only by adding k pieces of shares. In the present embodiment, a set obtained by collecting all shares shared by (k,k)-additive-secret-sharing under modulo y and having a certain value x in a plain text is expressed as <x>^{r}, a share of the party pᵣ is expressed as <x>^{y}ᵣ.

### <non-quotient transfer modulus conversion protocol>

Next, the non-quotient transfer modulus conversion protocol used in this embodiment will be described.

The non-quotient transfer modulus conversion protocol used in the present embodiment can efficiently perform modulus conversion on a prime field even when the condition of quotient transfer is not satisfied. The condition of the quotient transfer herein means that the number of empty bits is a predetermined number of bits. In the protocol, let a'₀+a₁=a+qp+2^{|p|}-p=a+2^{|p|}-(1-q)p be satisfied. When q=0, a'₀+a₁=2^{|p|}-(p-a) is satisfied, and from a<p, a'₀+a₁ is smaller than 2 ^{ipi} . In other words, q=0 ↔ a'₀+a₁<2^{|p|}. On the other hand, when q=1, a'₀+a₁=2^{|p|}+a is satisfied, and from a≥0, and a'₀+a₁ is 2^{|p|} or more. In other words, q=1 ↔ a'₀+a₁≥2^{|p|}. Therefore, the most significant bit of a'₀+a₁, the |p|th bit, is equal to q.

In the following, A non-quotient-transfer modulus conversion protocol utilizing the above-mentioned relationship will be described.

Input: (k,n)-secret-sharing share [[a]]^{p}.

Parameter: the number of bits|p| of p.

Output: (k,n)-secret-sharing share [[a]]^{Q} by different modulo Q.

Step 1: The share [[a]]^{P} is converted into (k,k)-additive-secret-sharing share <a>^{p}. Assuming that k=2, and the parties p₀, p₁ have a share <a>^{p}. The conversion from (k,n)-secret-sharing to (k,k)-additive-secret-sharing can be carried out by a known technique. For example, any of the methods described in NPL 1 is used.

Step 2: As for the party p₀, a'₀:=<a>^{p}₀+(2^{|p|}-p) is calculated without mod p by addition on Z, and the each bit of is shared by (k,n)-secret-sharing to obtain a bit representation share [[a'₀]]^{2^|p|}. The bit decomposition can be performed by a known technique. For example, any of the methods described in NPL 1 is used.

Step 3: As for the party p₁, each bit of <a>^{P}₁ is shared by (k,n)-secret-sharing to obtain a bit representation share [[a₁]]^{2^|p|}.

Step 4:A bit representation share [[a'₀+a₁]]2^{^(|p|+1)} of a'₀+a₁ is obtained by an addition circuit. After the addition circuit computation, the bit length increases by 1 from |p| to |p|+1.

Step 5:The most significant bit of [[a'₀+a₁]]2^{^(|p|+1)} is set to [[q]]². q is the quotient of share <a>^{p}, that is, q of the expression <a>₀+<a>₁=a+qp.

Step 6: [[q]]^{Q} is obtained from [[q]]² by mod 2 → mod Q conversion. For example, the mod 2 → mod Q conversion can be performed by a known technique. For example, any of the methods described in NPL 1 is used.

Step 7: As for the parties p₀, p₁, <a>^{P}₀ mod Q, <a>^{P}₁ mod Q are obtained from <a>^{P}₀, <a>^{P}₁ respectively, and set to <a'>^{Q}. Here, a'=a+qp mod Q is established.

Step 8: (k,k)-secret-sharing share <a'>^{Q} is converted into (k,n)-secret-sharing share, to obtain a (k,n)-secret-sharing share [[a']]^{Q}. The conversion from (k,k)-additive-secret-sharing to (k,n)-secret-sharing can be performed by a known technique. For example, any of the methods described in NPL 1 is used.

Step 9: [[a]]^{Q}=[[a']]^{Q}-p[[q]]^{Q} is calculated and outputted.

In the following, a secure modulus conversion system for realizing the above-mentioned non-quotient-transfer modulus conversion protocol will be described.

### <Secure modulus conversion system 1 according to a first embodiment of the present invention>

Fig. 1 shows an example of the configuration of the secure modulus conversion system 1 according to the first embodiment, and Fig. 2 shows an example of the processing flow of the secure modulus conversion system 1.

The secure modulus conversion system 1 includes n pieces of distributed processing apparatuses 100-r. Here, n is any integer of 3 or more, and r = 0, 1, ..., n-1. The n distributed processing apparatuses 100-r can communicate with each other via the communication line 2.

The secure modulus conversion system 1 takes as input a share [[a]]^{P} obtained by (k,n)-secret-sharing a numerical value a by modulo p, obtains and outputs a share [[a]]^{Q} obtained by (k,n)-secret-sharing the numerical value a by modulo Q different from the modulo p by using the number of bits |p| of p. Note that, p and Q are disclosed.

The distributed processing apparatus is a special device that consists of a special program loaded into a known or dedicated computer with, for example, a central processing unit (CPU), main memory (RAM: Random Access Memory), etc. The distributed processing apparatus executes each processing under the control of a central processing unit, for example. The data input to the distributed processing apparatus and the data obtained by each processing are stored in a main storage device, for example, and the data stored in the main storage device is read out to the central processing unit as necessary and used for other processing. At least a part of each processing part of the distributed processing apparatus may be constituted of hardware such as an integrated circuit. Each storage unit provided in the distributed processing apparatus can be constituted by a main storage device such as a RAM (Random Access Memory), or middle-ware such as a relational database or a key value store. However, each storage unit is not necessarily provided with the distributed processing apparatus inside, and may be constituted by an auxiliary storage device constituted by a hard disk, an optical disk or a semiconductor memory element such as a flash memory, or provided outside the distributed processing apparatus.

### <Distributed Processing Apparatus 100-r>

Fig. 3 illustrates a functional block diagram of a distributed processing apparatus 100-r.

. The distributed processing apparatus 100-r includes a first secret sharing conversion unit 101, a bit decomposition unit 103, an addition unit 105, a first modulus conversion unit 109, a second modulus conversion unit 111, a second secret sharing conversion unit 115, and a sure computation unit 117.

In the present embodiment, k in (k,k)-additive-secret-sharing is set to k=2, n in (k,n)-secret-sharing is set to any of integers of 3 or more, and k is set to any of integers of 2 or more and n or less, for example, k=2 and n=3.

In the following, processing that is performed by each unit will be described with reference to Fig. 2.

### <First secret sharing conversion unit 101>

N pieces of first secret sharing conversion units 101 convert (k,n)-secret-sharing shares [[a]]^{p} into (k, k)-additive-secret-sharing shares <a>^{p} (step S101). As described above, k in (k,k)-additive-secret-sharing is set to k= 2, the distributed processing apparatus 100-0 corresponding to the party p₀ has share <a>^{p}₀, and the distributed processing apparatus 100-1 corresponding to the party p₁ has share <a>^{p}₁.

### <Bit decomposition unit 103>

A bit decomposition unit 103 of the distributed processing apparatus 100-0, using share <a>^{p}₀ and p, calculates a'₀:=<a>^{p}₀+(2^{|p|}-p) without mod p by addition on Z. Note that, when <a>^{p}₀ is a scalar value, <a>^{p}₀+(2^{|p|}-p) means addition of the scalar value, and when <a>^{p}₀ is a vector, <a>^{p}₀+(2^{|p|}-p) means addition of (2^{|p|}-p) to each element of <a>^{p}₀.

N pieces of bit decomposition units 103 perform (k,n)-secret-sharing of each bit of to obtain a bit representation share [[a'₀]]^{2^|p|} (step S103-0).

Further, n pieces of bit decomposition units 103 perform (k,n)-secret-sharing of each bit of share <a>^{p}₁ of the distributed processing apparatus 100-1, and obtain a bit representation share [[a₁]]2^^{|p|} (step S103-1).

### <Addition unit 105>

N pieces of addition units 105 obtain a bit representation share [[a'₀+a₁]]^{2^(|p|+1)} of a'₀+a₁ by an additive circuit from the share [[a'₀]]^{2^|p|} and the share [[a₁]]^{2^|p|} obtained by S103-0, 103-1 (step S105).

### <First modulus conversion unit 109>

The most significant bit of [[a'₀+a₁]]^{2^(|p|+1)} is set to a share [[q]]². Note that, q is the quotient of the share <a>^{p}, that is, q of a expression <a>₀+<a>₁=a+qp.

N pieces of first modulus conversion units 109 obtain a share [[q]]^{Q} from the share [[q]]² by mod 2 → mod Q conversion.

### <Second modulus conversion unit 111>

The two second modulus conversion units 111 (the second modulus conversion units 111 of the distributed processing apparatus 100-0 and the distributed processing apparatus 100-1) obtain <a>^{p}₀ mod Q, <a>^{p}₁ mod Q from <a>^{p}₀, <a>^{p}₁ respectively, and set share <a'>^{Q} (step S111). Here, a'=a+qp mod Q is established.

For example, (i) when <a>^{p}₀, <a>^{p}₁ is smaller than Q, <a>^{p}₀, <a>^{p}₁ are obtained as it is as <a>^{p}₀ mod Q and <a>^{p}₁ mod Q, when <a>^{p}₀, <a>^{p}₁ is Q or more, <a>^{p}₀ mod Q and <a>^{p}₁ mod Q may be calculated and obtained, (ii) regardless of the magnitude relation between <a>^{p}₀, <a>^{p}₁ and Q, <a>^{p}₀ modQ and <a>^{p}₁ mod Q may be calculated.

Since only the second modulus conversion units 111 of the distributed processing apparatus 100-0 and the distributed processing apparatus 100-1 perform S111, only the distributed processing apparatus 100-0 and the distributed processing apparatus 100-1 may include the second modulus conversion units 111.

### <Second secret sharing conversion unit 115>

N pieces of second secret sharing conversion units 115 convert (k,k)-secret-sharing share <a'>^{Q} into (k,n)-secret-sharing share, to obtain (k,n)-secret-sharing share [[a']]^{Q} (step S115).

### <Sure computation unit 117>

N pieces of the sure computation units 117 calculate [[a]]^{Q}=[[a']]^{Q}-p[[q]]^{Q} from the share [[a']]^{Q} and the share [[g]]^{Q} (step S117), and output it as an output value of the secure modulus conversion system.

### <Effect>

With the above-described configuration, the modulus conversion can be efficiently performed even when the condition of the quotient transfer is not satisfied.

### <Processing efficiency>

The processing efficiency of the algorithm is evaluated. In the secure modulus conversion system according to the present embodiment, the communication amount is |Q|+|q| bits, |p| rounds.

### <Actual machine performance evaluation>

Fig. 4 shows the result of the actual machine experiment. The multi-party computation of the following three machines is performed.
- CPU: Xeon Gold 6144 3.5GHz, 6cores x 2 Sockets
- Memory: 768GB
- NW: 10Gbps ring topology
- OS: CentOS 7.3

Three scales of 1000 items, 1 million items, and 10 million items, and the actual number of rounds were measured by maximizing the delay to 100ms. The throughput was [M op/s] and the number of round was dimensionless. The performance of active models was also shown in addition to the passive model (expansion from passive version). The security parameter of the active model is 8 bits, and the attack detection rate is about 99%. This probability is sufficient to suppress the attack because the off-line attack is impossible differently from the computational safety.

### <Other Modified Examples>

The present invention is not limited to the foregoing embodiments and modified examples. For example, the above-described various kinds of processing may be performed chronologically, as described above, and may also be performed in parallel or individually in accordance with a processing capability of a device performing the processing or as necessary.

### <Program and Recording Medium>

The various kinds of processing described above can be implemented by loading a program that executes each step of the above method into a storage unit 2020 of the computer shown in Fig. 5, to enable a control unit 2010, an input unit 2030, an output unit 2040, and so on to operate.

The program describing the processing contents can be recorded on a computer-readable recording medium. As the computer-readable recording medium, for example, any of a magnetic recording device, an optical disc, a magneto-optical recording medium, and a semiconductor memory may be used.

In addition, the distribution of this program is carried out by, for example, selling, transferring, or lending a portable recording medium such as a DVD or a CD-ROM on which the program is recorded. Further, the program may be distributed by storing the program in a storage device of a server computer and transmitting the program from the server computer to other computers via a network.

A computer executing such a program is configured to, for example, first, temporarily store a program recorded on a portable recording medium or a program transferred from a server computer, and stores the data in its own storage device. Then, at the time of executing the processing, the computer reads the program stored in its own recording medium and executes the processing according to the read program. As another execution form of the program, the computer may directly read the program from the portable recording medium and execute processing according to the program, each time a program is transferred from the server computer to the computer, processing according to the received program may be executed sequentially. In addition, by a so-called ASP (Application Service Provider) type service which does not transfer a program from the server computer to the computer and realizes a processing function only by the execution instruction and the result acquisition, the above-mentioned processing may be executed. It is assumed that the program in this embodiment includes data which is information to be provided for processing by the electronic computer and equivalent to program (data or the like which is not a direct command to the computer conforming to the program but has a property to specify the processing of the computer).

In this aspect, the device is configured by executing a predetermined program on a computer, but at least a part of the processing content may be implemented by hardware.

## Claims

1. A secure modulus conversion system including n pieces of distributed processing apparatuses wherein:
n pieces of the distributed processing apparatuses each include a first secret sharing conversion unit, a bit decomposition unit, an addition unit, a first modulus conversion unit, a second modulus conversion unit, a second secret sharing conversion unit, and a sure computation unit; two distributed processing apparatuses p₀, p₁ of n pieces of the distributed processing apparatuses each include a second modulus conversion unit,
it is assumed that a share [[a]]^{p} is a (k,n) -secret-sharing share of a plain text a by modulo p, where n in (k,n)-secret-sharing is any one of an integer of 3 or more, k is any one of an integer of 2 or more and less than n, and it is assumed that a share <a>^{p} is a (k,k)-additive-secret-sharing share of a plain text a by modulo p and a share of the party pᵣ is expressed as <x>^{y}ᵣ;
n pieces of the first secret sharing conversion units convert (k,n) -secret-sharing share [[a]]^{P} into (k,k) -additive-secret-sharing share <a>^{p} of shares which distributed processing apparatuses p₀ and p₁ have, wherein distributed processing apparatuses p₀ and p₁ have shares <a>^{p}₀ and <a>^{p}₁ included in the share <a>^{p}, respectively;
the bit decomposition unit of the distributed processing apparatus p₀ calculates a'₀:=<a>^{p}₀+(2^{|p|}-p) by using the share <a>^{p}₀;
it is assumed that [[x]]^{2^m} is a share with m units arranged shares of the form of [[x]]², n pieces of the bit decomposition units perform (k,n)-secret-sharing of each bit of to obtain a bit representation share [[a'₀]]^{2^|p|}, perform (k,n)-secret-sharing of each bit of the share <a>^{p}₁ to obtain a bit representation share [[a₁]]^{2^|p|};
n pieces of the addition units obtain a bit representation share [[a'₀+a₁]]^{2^(|p|+1)} of a'₀+a₁ from the share [[a'₀]]^{2^|p|} and the share [[a₁]]^{2^|p|} by an additive circuit;
it is assumed that the most significant bit of the share [[a'₀+a₁]]^{2^(|p|+1)} is a share [[q]]² and q is the quotient of the share <a>^{p}, n pieces of the first modulus conversion units obtain a share [[q]]^{Q} from the share [[q]]² by mod 2 → mod Q conversion;
two of the second modulus conversion units obtain <a>^{p}₀ mod Q, <a>^{P}₁mod Q from <a>^{p}₀, <a>^{p}₁ respectively, and set as a share <a'>^{Q};
n pieces of the second secret sharing conversion units convert the share <a'>^{Q} into (k,n)-secret-sharing to obtain (k,n)-secret-sharing share [[a']]^{Q}; and
n pieces of the sure computation units calculate [[a]]^{Q}=[[a']]^{Q}-p[[q]]^{Q}from the share [[a']]^{Q} and the share [[q]]^{Q} and output it as an output value of the secure modulus conversion system.

2. A distributed processing apparatus included in a secure modulus conversion system comprising:
it is assumed that a share [[a]]^{p} is a (k,n) -secret-sharing share of a plain text a by modulo p, where n in (k,n)-secret-sharing is any one of an integer of 3 or more, k is any one of an integer of 2 or more and less than n, and it is assumed that a share <a>^{p} is a (k,k)-additive-secret-sharing share of a plain text a by modulo p and a share of the party pᵣ is expressed as <x>^{y}ᵣ;
a first secret sharing conversion unit (101) which converts, together with (n-1) pieces of distributed processing apparatuses, (k,n)-secret-sharing share [[a]]^{p} into (k,k)-additive-secret-sharing share <a>^{p} of shares which distributed processing apparatuses p₀ and p₁ have, wherein distributed processing apparatuses p₀ and p₁ have shares <a>^{p}₀ and <a>^{p}₁ included in the share <a>^{p}, respectively;
it is assumed that [[x]]^{2^m} is a share with m units arranged shares of the form of [[x]]², a bit decomposition unit (103) which performs (k,n)-secret-sharing of each bit of a'₀:=<a>^{P}₀+(2^{|p|}-p) to obtain a bit representation share [[a'₀]]^{2^|p|}, and performs (k,n)-secret-sharing of each bit of the share <a>^{p}₁ to obtain a bit representation share [[a₁]]^{2^|p|} together with (n-1) pieces of distributed processing apparatuses;
an addition unit (105) which obtains a bit representation share [[a'₀+a₁]]^{2^(|p|+1)} of a'₀+a₁ from the share [[a'₀]]^{2^|p|} and the share [[a₁]]^{2^|p|} by an additive circuit together with (n-1) pieces of distributed processing apparatuses;
it is assumed that the most significant bit of the share [[a'₀+a₁]]^{2^(|p|+1)} is a share [[q]]² and q is the quotient of the share <a>^{p}, a first modulus conversion unit (109) which obtains a share [[q]]^{Q} from the share [[q]]² by mod 2 → mod Q conversion together with (n-1) pieces of the distributed processing apparatuses;
it is assumed that <a>^{p}₀ mod Q, <a>^{p}₁ mod Q are set as a share <a'>^{Q}, a second secret sharing conversion unit (115) convert the share <a'>^{Q} into (k,n)-secret-sharing to obtain (k,n)-secret-sharing share [[a']]^{Q} together with (n-1) pieces of distributed processing apparatuses; and
a sure computation unit (117) which calculates [[a]]^{Q}=[[a']]^{Q}-p[[q]]^{Q} from the share [[a']]^{Q} and the share [[q]]^{Q} together with (n-1) pieces of distributed processing apparatuses and output it as an output value of the secure modulus conversion system.

3. A secure modulus conversion method using a secure modulus conversion system including n pieces of distributed processing apparatuses
wherein:
n pieces of the distributed processing apparatuses each include a first secret sharing conversion unit, a bit decomposition unit, an addition unit, a first modulus conversion unit, a second modulus conversion unit, a second secret sharing conversion unit, and a sure computation unit;
two distributed processing apparatuses p₀, p₁ of n pieces of the distributed processing apparatuses each include a second modulus conversion unit; and comprising:
a first modulus conversion step (S101) in which it is assumed that a share [[a]]^{p} is a (k,n)-secret-sharing share of a plain text a by modulo p, where n in (k,n)-secret-sharing is any one of an integer of 3 or more, k is any one of an integer of 2 or more and less than n, and it is assumed that a share <a>^{p} is a (k,k)-additive-secret-sharing share of a plain text a by modulo p and a share of the party pᵣ is expressed as <x>^{y}ᵣ,
n pieces of the first secret sharing conversion units convert (k,n) -secret-sharing share [[a]]^{p} into (k,k) -additive-secret-sharing share <a>^{p} of shares which distributed processing apparatuses p₀ and p₁ have, wherein distributed processing apparatuses p₀ and p₁ have shares <a>^{p}₀ and <a>^{p}₁ included in the share <a>^{p}, respectively;
a bit decomposition step (S103-0, S103-1) in which it is assumed that a'₀:=<a>^{p}₀+(2^{|p|}|-p) and that [[x]]^{2^m} is a share with m units arranged shares of the form of [[x]]², n pieces of the bit decomposition units perform (k,n)-secret-sharing of each bit of to obtain a bit representation share [[a'₀]]^{2^|p|}, perform (k,n)-secret-sharing of each bit of the share <a>^{p}₁ to obtain a bit representation share [[a₁]]^{2^|p|};
an addition step (S105) in which n pieces of the addition units obtain a bit representation share [[a'₀+a_{1]}]^{2^(|p|+1)} of a'₀+a₁ from the share [[a'₀]]^{2^|p|} and the share E[a₁]]^{2^|p|} by an additive circuit;
a first modulus conversion step (S109) in which it is assumed that the most significant bit of the share [[a'₀+a₁]]^{2^(|p|+1)} is a share [[q]]² and q is the quotient of the share <a>^{p}, n pieces of the first modulus conversion units obtain a share [[q]]^{Q} from the share [[q]]² by mod 2 → mod Q conversion;
a second modulus conversion step (S111) in which two of the second modulus conversion units obtain <a>^{p}₀ mod Q, <a>^{P}₁mod Q from <a>^{p}₀, <a>^{p}₁ respectively, and set as a share <a'>^{Q};
a second secret sharing conversion step (S115) in which n pieces of the second secret sharing conversion units convert the share <a'>^{Q} into (k,n)-secret-sharing to obtain (k,n)-secret-sharing share [[a']]^{Q}; and
a sure computation step (S117) in which n pieces of the sure computation units calculate [[a]]^{Q}=[[a']]^{Q}-p[[q]]^{Q} from the share [[a']]^{Q} and the share [[q]]^{Q} and output it as an output value of the secure modulus conversion system.

4. A program causing a computer to function as the distributed processing apparatus according to claim 2.

## Patentansprüche

1. Sicheres Moduloumschreibungssystem, das n Teile von verteilten Verarbeitungsvorrichtungen enthält, wobei:
n Teile der verteilten Verarbeitungsvorrichtungen jeweils eine erste Geheimnisteilungsumwandlungseinheit, eine Bitzerlegungseinheit, eine Additionseinheit, eine erste Moduloumschreibungseinheit, eine zweite Moduloumschreibungseinheit, eine zweite Geheimnisteilungsumwandlungseinheit und eine sichere Berechnungseinheit enthalten;
zwei verteilte Verarbeitungsvorrichtungen p₀, p₁ von n Teilen der verteilten Verarbeitungsvorrichtungen jeweils eine zweite Moduloumschreibungseinheit enthalten, angenommen wird, dass ein Anteil [[a]]^{p} ein (k,n)-Geheimnisteilungs-Anteil eines Klartexts a durch Modulo p ist, wobei n in (k,n)-Geheimnisteilung eine beliebige einer ganzen Zahl von 3 oder mehr ist, k eine beliebige einer ganzen Zahl von 2 oder mehr und weniger als n ist, und angenommen wird, dass ein Anteil <a>^{p} ein (k,k)-Additiv-Geheimnisteilungsanteil eines Klartexts a durch Modulo p ist und ein Anteil des Beteiligten pᵣ als <x>^{y}ᵣ ausgedrückt wird;
n Teile der ersten Geheimnisteilungsumwandlungseinheiten (k,n)-Geheimnisteilungsanteil [[a]]^{P} in (k,k)-Additiv-Geheimnisteilungsanteil <a>^{p} von Anteilen umwandeln, die verteilte Verarbeitungsvorrichtungen p₀ und p₁ aufweisen, wobei verteilte Verarbeitungsvorrichtungen p₀ und p₁ Anteile <a>^{p}₀ bzw. <a>^{p}₁ aufweisen, die in dem Anteil <a>^{p} enthalten sind;
die Bitzerlegungseinheit der verteilten Verarbeitungsvorrichtung p₀ a'₀:=<a>^{p}₀+(2^{|p|}-p) unter Verwendung des Anteils <a>^{p}₀ berechnet;
angenommen wird, dass [[x]]^{2^m} ein Anteil mit m Einheiten von angeordneten Anteilen der Form [[x]]², n Teile der Bitzerlegungseinheiten (k,n)-Geheimnisteilung jedes Bits von durchführen, um einen Bitdarstellungsanteil [[a'₀]]^{2^|p|} zu erhalten, (k,n)-Geheimnisteilung jedes Bits des Anteils <a>^{p}₁ durchführen, um einen Bitdarstellungsanteil [[a₁]]^{2^|p|} zu erhalten;
n Teile der Additionseinheiten einen Bitdarstellungsanteil [[a'₀+a₁]]^{2^(|p|+1)} von a'₀+a₁ aus dem Anteil [[a'₀]]^{2^|p|} und dem Anteil [[a₁]]^{2^|p|} durch eine additive Schaltung erhalten;
angenommen wird, dass das höchstwertige Bit des Anteils [[a'₀+a₁]]^{2^(|p|+1)} ein Anteil [[q]]² ist und q der Quotient des Anteils <a>^{p} ist, n Teile der ersten Moduloumschreibungseinheiten einen Anteil [[q]]^{Q} aus dem Anteil [[q]]² durch "mod 2 → mod Q"-Umschreibung erhalten;
zwei der zweiten Moduloumschreibungseinheiten <a>^{p}₀ mod Q, <a>^{P}₁mod Q aus <a>^{p}₀ bzw. <a>^{p}₁ erhalten und als ein Anteil <a'>^{Q} gesetzt werden;
n Teile der zweiten Geheimnisteilungsumwandlungseinheiten den Anteil <a'>^{Q} in (k,n)-Geheimnisteilung umwandeln, um (k,n)-Geheimnisteilungsanteil [[a']]^{Q} zu erhalten; und
n Teile der sicheren Berechnungseinheiten [[a]]^{Q}=[[a']]^{Q}-p[[q]]^{Q} aus dem Anteil [[a']]^{Q} und dem Anteil [[q]]^{Q} berechnen und sie als einen Ausgabewert des sicheren Moduloumschreibungssystems ausgeben.

2. Verteilte Verarbeitungsvorrichtung, die in einem sicheren Moduloumschreibungssystem enthalten ist, mit:
unter Annahme, dass ein Anteil [[a]]^{p} ein (k,n)-Geheimnisteilungs-Anteil eines Klartexts a durch Modulo p ist, wobei n in (k,n)-Geheimnisteilung eine beliebige einer ganzen Zahl von 3 oder mehr ist, k eine beliebige einer ganzen Zahl von 2 oder mehr und weniger als n ist, und unter Annahme, dass ein Anteil <a>^{p} ein (k,k)-Additiv-Geheimnisteilungsanteil eines Klartexts a durch Modulo p ist und ein Anteil des Beteiligten pᵣ als <x>^{y}ᵣ ausgedrückt wird;
einer ersten Geheimnisteilungsumwandlungseinheit (101), die zusammen mit (n-1) Teilen von verteilten Verarbeitungsvorrichtungen (k,n)-Geheimnisteilungsanteil [[a]]^{p} in (k,k)-Additiv-Geheimnisteilungsanteil <a>^{p} von Anteilen umwandelt, die verteilte Verarbeitungsvorrichtungen p₀ und p₁ aufweisen, wobei verteilte Verarbeitungsvorrichtungen p₀ und p₁ Anteile <a>^{p}₀ bzw. <a>^{p}₁ aufweisen, die in dem Anteil <a>^{p} enthalten sind;
unter Annahme, dass [[x]]^{2^m} ein Anteil mit m Einheiten von angeordneten Anteilen der Form [[x]]² ist, einer Bitzerlegungseinheit (103), die (k,n)-Geheimnisteilung jedes Bits von a'₀:=<a>^{p}₀+(2^{|p|}-p) durchführt, um einen Bitdarstellungsanteil [[a'₀]]^{2^|p|} zu erhalten, und (k,n)-Geheimnisteilung jedes Bits des Anteils <a>^{p}₁ durchführt, um einen Bitdarstellungsanteil [[a₁]]^{2^|p|} zusammen mit (n-1) Teilen von verteilten Verarbeitungsvorrichtungen zu erhalten;
einer Additionseinheit (105), die einen Bitdarstellungsanteil [[a'₋+a₁]]^{2^(|p|+1)} von a'₀+a₁ aus dem Anteil [[a'₀]]^{2^|p|} und dem Anteil [[a₁]]^{2^|p|} durch eine additive Schaltung zusammen mit (n-1) Teilen von verteilten Verarbeitungsvorrichtungen erhält;
unter Annahme, dass das höchstwertige Bit des Anteils [[a'₀+a₁]]^{2^(|p|+1)} ein Anteil [[q]]² ist und q der Quotient des Anteils <a>^{p} ist, einer ersten Moduloumschreibungseinheit (109), die einen Anteil [[q]]^{Q} aus dem Anteil [[q]]² durch "mod 2 → mod Q"-Umschreibung zusammen mit (n-1) Teilen der verteilten Verarbeitungsvorrichtungen erhält;
unter Annahme, dass <a>^{p}₀ mod Q, <a>^{p}₁ mod Q als ein Anteil <a'>^{Q} gesetzt werden, einer zweiten Geheimnisteilungsumwandlungseinheit (115) den Anteil <a'>^{Q} in (k,n)-Geheimnisteilung umwandelt, um (k,n)-Geheimnisteilungsanteil [[a']]^{Q} zusammen mit (n-1) Teilen von verteilten Verarbeitungsvorrichtungen zu erhalten; und
einer sicheren Berechnungseinheit (117), die [[a]]^{Q}=[[a']]^{Q}-p[[q]]^{Q} aus dem Anteil [[a']]^{Q} und dem Anteil [[q]]^{Q} zusammen mit (n-1) Teilen von verteilten Verarbeitungsvorrichtungen berechnet und sie als einen Ausgabewert des sicheren Moduloumschreibungssystems ausgibt.

3. Sicheres Moduloumschreibungsverfahren, das ein sicheres Moduloumschreibungssystem verwendet, das n Teile von verteilten Verarbeitungsvorrichtungen enthält,
wobei:
n Teile der verteilten Verarbeitungsvorrichtungen jeweils eine erste Geheimnisteilungsumwandlungseinheit, eine Bitzerlegungseinheit, eine Additionseinheit, eine erste Moduloumschreibungseinheit, eine zweite Moduloumschreibungseinheit, eine zweite Geheimnisteilungsumwandlungseinheit und eine sichere Berechnungseinheit enthalten;
zwei verteilte Verarbeitungsvorrichtungen p₀, p₁ von n Teilen der verteilten Verarbeitungsvorrichtungen jeweils eine zweite Moduloumschreibungseinheit enthalten; und mit:
einem ersten Moduloumschreibungsschritt (S101), in dem angenommen wird, dass ein Anteil [[a]]^{p} ein (k,n)-Geheimnisteilungsanteil eines Klartexts a durch Modulo p ist, wobei n in (k,n)-Geheimnisteilung eine beliebige einer ganzen Zahl von 3 oder mehr ist, k eine beliebige einer ganzen Zahl von 2 oder mehr und weniger als n ist, und angenommen wird, dass ein Anteil <a>^{p} ein (k,k)-Additiv-Geheimnisteilungsanteil eines Klartexts a durch Modulo p ist und ein Anteil des Beteiligten pᵣ als <x>^{y}ᵣ ausgedrückt wird;
n Teile der ersten Geheimnisteilungsumwandlungseinheiten (k,n)-Geheimnisteilungsanteil [[a]]^{p} in (k,k)-Additiv-Geheimnisteilungsanteil <a>^{p} von Anteilen umwandeln, die verteilte Verarbeitungsvorrichtungen p₀ und p₁ aufweisen, wobei verteilte Verarbeitungsvorrichtungen p₀ und p₁ Anteile <a>^{p}₀ bzw. <a>^{p}₁ aufweisen, die in dem Anteil <a>^{p} enthalten sind;
einem Bitzerlegungsschritt (S103-0, S103-1), in dem angenommen wird, dass a'₀:=<a>^{p}₀+(2^{|p|}-p) und dass [[x]]^{2^m} ein Anteil mit m Einheiten von angeordneten Anteilen der Form [[x]]² ist, n Teile der Bitzerlegungseinheiten (k,n)-Geheimnisteilung jedes Bits von durchführen, um einen Bitdarstellungsanteil [[a'₀]]^{2^|p|} zu erhalten, (k,n)-Geheimnisteilungjedes Bits des Anteils <a>^{p}₁ durchführen, um einen Bitdarstellungsanteil [[a₁]]^{2^|p|} zu erhalten;
einem Additionsschritt (S105), in dem n Teile der Additionseinheiten einen Bitdarstellungsanteil [[a'₀+a₁]]^{2^(|p|+1)} von a'₀+a₁ aus dem Anteil [[a'₀]]^{2^|p|} und dem Anteil [[a₁]]^{2^|p|} durch eine additive Schaltung erhalten;
einem ersten Moduloumschreibungsschritt (S109), in dem angenommen wird, dass das höchstwertige Bit des Anteils [[a'₀+a₁]]^{2^(|p|+1)} ein Anteil [[q]]² ist und q der Quotient des Anteils <a>^{p} ist, n Teile der ersten Moduloumschreibungseinheiten einen Anteil [[q]]^{Q} aus dem Anteil [[q]]² durch "mod 2 --+ mod Q"-Umschreibung erhalten;
einem zweiten Moduloumschreibungsschritt (S111), in dem zwei der zweiten Moduloumschreibungseinheiten <a>^{p}₀ mod Q, <a>^{P}₁mod Q aus <a>^{p}₀ bzw. <a>^{p}₁ erhalten und als ein Anteil <a'>^{Q} gesetzt werden;
einem zweiten Geheimnisteilungsumwandlungsschritt (S115), in dem n Teile der zweiten Geheimnisteilungsumwandlungseinheiten den Anteil <a'>^{Q} in (k,n)-Geheimnisteilung umwandeln, um (k,n)-Geheimnisteilungsanteil [[a']]^{Q} zu erhalten; und
einem sicheren Berechnungsschritt (S117), in dem n Teile der sicheren Berechnungseinheiten [[a]]^{Q}=[[a']]^{Q}-p[[q]]^{Q} aus dem Anteil [[a']]^{Q} und dem Anteil [[q]]^{Q} berechnen und sie als einen Ausgabewert des sicheren Moduloumschreibungssystems ausgeben.

4. Programm, das bewirkt, dass ein Computer als die verteilte Verarbeitungsvorrichtung nach Anspruch 2 fungiert.

## Revendications

1. Système de conversion de module sécurisé comprenant n éléments d'appareils de traitement distribués, dans lequel :
n éléments des appareils de traitement distribués comprennent chacun une première unité de conversion de partage de secret, une unité de décomposition de bits, une unité d'addition, une première unité de conversion de module, une seconde unité de conversion de module, une seconde unité de conversion de partage de secret, et une unité de calcul sécurisé ;
deux appareils de traitement distribués p₀, p₁ de n éléments des appareils de traitement distribués comprennent chacun une seconde unité de conversion de module, il est supposé qu'un partage [[a]]^{p} est un partage de partage de secret (k,n) d'un texte en clair a par modulo p, où n dans le partage de secret (k,n) est l'un quelconque d'un nombre entier de 3 ou plus, k est l'un quelconque d'un nombre entier de 2 ou plus et inférieur à n, et il est supposé qu'un partage <a>^{p} est un partage de partage de secret additif (k,k) d'un texte en clair a par modulo p et un partage de la partie pᵣ est exprimé par <x>^{y}ᵣ;
n éléments des premières unités de conversion de partage de secret convertissent un partage de partage de secret (k,n) [[a]]^{p} en un partage de partage de secret additif (k,k) <a>^{p} de partages que les appareils de traitement distribués p₀ et p₁ ont, dans lequel les appareils de traitement distribués p₀ et p₁ ont des partages <a>^{p}₀ et <a>^{p}₁ inclus dans le partage <a>^{p}, respectivement ;
l'unité de décomposition de bits de l'appareil de traitement distribué p₀ calcule a'₀:=<a>^{p}₀+(2^{|p|}-p) en utilisant le partage <a>^{p}₀ ;
il est supposé que [[x]]^{2^m} est un partage avec m unités agencées de partages de la forme de [[x]]², n éléments des unités de décomposition de bits effectuent un partage de secret (k,n) de chaque bit de pour obtenir un partage de représentation de bits [[a'₀]]^{2^|p|}, effectuent un partage de secret (k,n) de chaque bit du partage <a>^{p}₁ pour obtenir un partage de représentation de bits [[a₁]]^{2^|p|};
n éléments des unités d'addition obtiennent un partage de représentation de bits [[a'₋+a₁]]^{2^(|p|+1)} de a'₀+a₁ à partir du partage [[a'₀]]^{2^|p|} et du partage [[a₁]]^{2^|p|} par un circuit additif ;
il est supposé que le bit le plus significatif du partage [[a'₀+a₁]]^{2^(|p|+1)} est un partage [[q]]² et q est le quotient du partage <a>^{p}, n éléments des premières unités de conversion de module obtiennent un partage [[q]]^{Q} à partir du partage [[q]]² par une conversion mod 2 → mod Q ;
deux des secondes unités de conversion de module obtiennent <a>^{p}₀ mod Q, <a>^{p}₁ mod Q à partir de <a>^{p}₀, <a>^{p}₁, respectivement, et définies comme un partage <a'>^{Q} ;
n éléments des secondes unités de conversion de partage de secret convertissent le partage <a'>^{Q} en un partage de secret (k,n) pour obtenir un partage de partage de secret (k,n) [[a']]^{Q} ; et
n éléments des unités de calcul de sécurité calculent [[a]]^{Q}=[[a']]^{Q}-p[[q]]^{Q} à partir du partage [[a']]^{Q} et du partage [[q]]^{Q} et le délivrent en sortie en tant que valeur de sortie du système de conversion de module sécurisé.

2. Appareil de traitement distribué inclus dans un système de conversion de module sécurisé comprenant :
il est supposé qu'un partage [[a]]^{p} est un partage de partage de secret (k,n) d'un texte en clair a par modulo p, où n dans le partage de secret (k,n) est l'un quelconque d'un nombre entier de 3 ou plus, k est l'un quelconque d'un nombre entier de 2 ou plus et inférieur à n, et il est supposé qu'un partage <a>^{p} est un partage de partage de secret additif (k,k) d'un texte en clair a par modulo p et un partage de la partie pᵣ est exprimé par <x>^{y}ᵣ;
une première unité de conversion de partage de secret (101) qui convertit, conjointement avec (n-1) éléments d'appareils de traitement distribués, un partage de partage de secret (k,n) [[a]]^{p} en un partage de partage de secret additif (k,k) <a>^{p} de partages que les appareils de traitement distribués p₀ et p₁ ont, dans lequel les appareils de traitement distribués p₀ et p₁ ont des partages <a>^{p}₀ et <a>^{p}₁ inclus dans le partage <a>^{p}, respectivement ;
il est supposé que [[x]]^{2^m} est un partage avec m unités agencées de partages de la forme de [[x]]², une unité de décomposition de bits (103) qui effectue un partage de secret (k,n) de chaque bit de a'₀:=<a>^{p}₀+(2^{|p|}-p) pour obtenir un partage de représentation de bits [[a'₀]]^{2^|p|}, et effectue un partage de secret (k,n) de chaque bit du partage <a>^{p}₁ pour obtenir un partage de représentation de bits [[a₁]]^{2^|p|} conjointement avec (n-1) éléments d'appareils de traitement distribués ;
une unité d'addition (105) qui obtient un partage de représentation de bits [[a'₀+a₁]]^{2^(|p|+1)} de a'₀+a₁ à partir du partage [[a'₀]]^{2^|p|} et du partage [[a₁]]^{2^|p|}par un circuit additif conjointement avec (n-1) éléments d'appareils de traitement distribués ;
il est supposé que le bit le plus significatif du partage [[a'₀+a₁]]^{2^(|p|+1)} est un partage [[q]]² et q est le quotient du partage <a>^{p}, une première unité de conversion de module (109) qui obtient un partage [[q]]^{Q} à partir du partage [[q]]² par une conversion mod 2 → mod Q conjointement avec (n-1) éléments des appareils de traitement distribués ;
il est supposé que <a>^{p}₀ mod Q, <a>^{p}₁ mod Q sont définis comme un partage <a'>^{Q}, une seconde unité de conversion de partage de secret (115) convertit le partage <a'>^{Q} en un partage de secret (k,n) pour obtenir un partage de partage de secret (k,n) [[a']]^{Q} conjointement avec (n-1) éléments d'appareils de traitement distribués ; et
une unité de calcul de sécurité (117) qui calcule [[a]]^{Q}=[[a']]^{Q}-p[[q]]^{Q} à partir du partage [[a']]^{Q} et du partage [[q]]^{Q} conjointement avec (n-1) éléments d'appareils de traitement distribués et le délivre en sortie en tant que valeur de sortie du système de conversion de module sécurisé.

3. Procédé de conversion de module sécurisé utilisant un système de conversion de module sécurisé comprenant n éléments d'appareils de traitement distribués,
dans lequel :
n éléments des appareils de traitement distribués comprennent chacun une première unité de conversion de partage de secret, une unité de décomposition de bits, une unité d'addition, une première unité de conversion de module, une seconde unité de conversion de module, une seconde unité de conversion de partage de secret, et une unité de calcul sécurisé ;
deux appareils de traitement distribués p₀, p₁ de n éléments des appareils de traitement distribués comprennent chacun une seconde unité de conversion de module ; et comprenant :
une première étape de conversion de module (S101) dans laquelle il est supposé qu'un partage [[a]]^{p} est un partage de partage de secret (k,n) d'un texte en clair a par modulo p, où n dans le partage de secret (k,n) est l'un quelconque d'un nombre entier de 3 ou plus, k est l'un quelconque d'un nombre entier de 2 ou plus et inférieur à n, et il est supposé qu'un partage <a>^{p} est un partage de partage de secret additif (k,k) d'un texte en clair a par modulo p et un partage de la partie pᵣ est exprimé par <x>^{y}ᵣ;
n éléments des premières unités de conversion de partage de secret convertissent un partage de partage de secret (k,n) [[a]]^{p} en un partage de partage de secret additif (k,k) <a>^{p} de partages que les appareils de traitement distribués p₀ et p₁ ont, dans lequel les appareils de traitement distribués p₀ et p₁ ont des partages <a>^{p}₀ et <a>^{p}₁ inclus dans le partage <a>^{p}, respectivement ;
une étape de décomposition de bits (S103-0, S103-1) dans laquelle il est supposé que a'₀:=<a>^{p}₀+(2^{|p|}-p) et que [[x]]^{2^m} est un partage avec m unités agencées de partages de la forme de [[x]]², n éléments des unités de décomposition de bits effectuent un partage de secret (k,n) de chaque bit de pour obtenir un partage de représentation de bits [[a'₀]]^{2^|p|}, effectuent un partage de secret (k,n) de chaque bit du partage <a>^{p}₁ pour obtenir un partage de représentation de bits [[a₁]]^{2^|p|};
une étape d'addition (S105) dans laquelle n éléments des unités d'addition obtiennent un partage de représentation de bits [[a'₀+a₁]]^{2^(|p|+1)} de a'₀+a₁ à partir du partage [[a'₀]]^{2^|p|} et du partage [[a₁]]^{2^|p|}par un circuit additif ;
une première étape de conversion de module (S109) dans laquelle il est supposé que le bit le plus significatif du partage [[a'₀+a₁]]^{2^(|p|+1)} est un partage [[q]]² et q est le quotient du partage <a>^{p}, n éléments des premières unités de conversion de module obtiennent un partage [[q]]^{Q} à partir du partage [[q]]² par une conversion mod 2 → mod Q ;
une seconde étape de conversion de module (S111) dans laquelle deux des secondes unités de conversion de module obtiennent <a>^{p}₀ mod Q, <a>^{p}₁ mod Q à partir de <a>^{p}₀, <a>^{p}₁, respectivement, et définies comme un partage <a'>^{Q} ;
une seconde étape de conversion de partage de secret (S115) dans laquelle n éléments des secondes unités de conversion de partage de secret convertissent le partage <a'>^{Q} en un partage de secret (k,n) pour obtenir un partage de partage de secret (k,n) [[a']]^{Q} ; et
une étape de calcul de sécurité (S117) dans laquelle n éléments des unités de calcul de sécurité calculent [[a]]^{Q}=[[a']]^{Q}-p[[q]]^{Q} à partir du partage [[a']]^{Q} et du partage [[q]]^{Q} et le délivrent en sortie en tant que valeur de sortie du système de conversion de module sécurisé.

4. Programme amenant un ordinateur à fonctionner comme l'appareil de traitement distribué selon la revendication 2.
